# EUROPEAN PATENT APPLICATION

(11) **EP 3 228 880 A1**
(43) Date of publication of application: **11.10.2017**
(21) Application number: 17164002.2
(22) Date of filing: 30.03.2017
(51) Int. Cl.: F16B 21/08, H02G 3/32, F16L 3/233

(54) **FIR TREE MOUNT**

(30) Priority: 08.04.2016 US 201615094713
(71) Applicant: Hellermanntyton Corporation, Milwaukee, WI 53224 (US)
(72) Inventor: GEIGER, Gerard G., Jackson, WI 53037 (US); TRAUTFIELD, Walter Patrick, San Francisco, CA 94121 (US)
(74) Representative: Delphi France SAS

(57) **Abstract**

The disclosed device (10) provides an improved mounting assembly for supporting elongated items or bundles (80) against a support surface (100) having a bore. The assembly provides a mount including an integrally formed flexible tie (12) for retaining the items. The tie (12) includes a hinge member (70) to allow the tie (12) to encircle the elongate items (80), to apply an even circumferential force against the items, and to align the items with the bore. The tie (12) further includes an aperture having a pawl, which engages the flexible strap (12) when it is inserted in the aperture to secure the elongate items (80). The device (10) also includes a mounting stud having a plurality of branch rows, each row including a plurality of longitudinally spaced branches. The branches extend radially outwardly from a center section and each terminates in a distal end, with the distal ends of branches in adjacent branch rows defining an interrupted helical path.

## Description

### BACKGROUND OF THE INVENTION

This invention relates generally to fasteners for securing bundled elongate articles, such as wires, cables, hoses, tubing, fiber optics, conduits, vines, harnesses, etc., to a supporting structure. More particularly, the invention relates to a bundle retention device for securing elongated articles, extending from and through the fastener along the supporting structure or mounting surface.

Flexible cable ties are widely used to secure elongate items, such as wires, cables, hoses and tubes, into compact, secure bundles. Typically, such cable ties include a head and a flexible strap, which terminates in a tail. In use, the tail, followed by the strap is looped around an elongate item, the tail is inserted through an optional slotted opening of a mount, and then through an aperture of a cable tie head. Next, the tail is pulled to tighten the strap around the articles, and thereby secure the articles into a compact, orderly bundle. A pawl mechanism within the head aperture secures the strap against withdrawal.

In many applications, it is sufficient to merely secure the elongate items into a bundle. Such applications might include, for example, stationary electronic equipment that remains in one place and is subject to little or no movement or vibration in use. Also in long distance routing of bundles such as wires, cables, hoses, tubing, etc., on stationary or moving equipment, it is desirable to compress the aforementioned bundles into a small diameter by applying cable ties at a reoccurring distances (of 12 inches for example). In other applications, it is necessary or desirable not only to secure the items into a bundle, but to secure the resulting bundle to a supporting chassis or framework as well. Such applications are also common, for example, in cars, trucks, airplanes, ships, boats and other vehicles where the bundle is likely to be subjected to severe jostling and vibration. In other applications (e.g. buildings), where vibration might not be an important consideration, it is still desirable to secure cables, hoses, tubes, etc., to a fixed, supporting structure.

Generally, the strap and the mount will be manufactured as separate items; however, since the strap and mount are used together, it is advantageous that the items be located near each other before being used for bundling an object or objects. The items may be loosely joined together in some fashion, as is depicted in U.S. Pat. No. 8,028,962, or the cable tie may be integrally formed with the mount, as in the present invention.

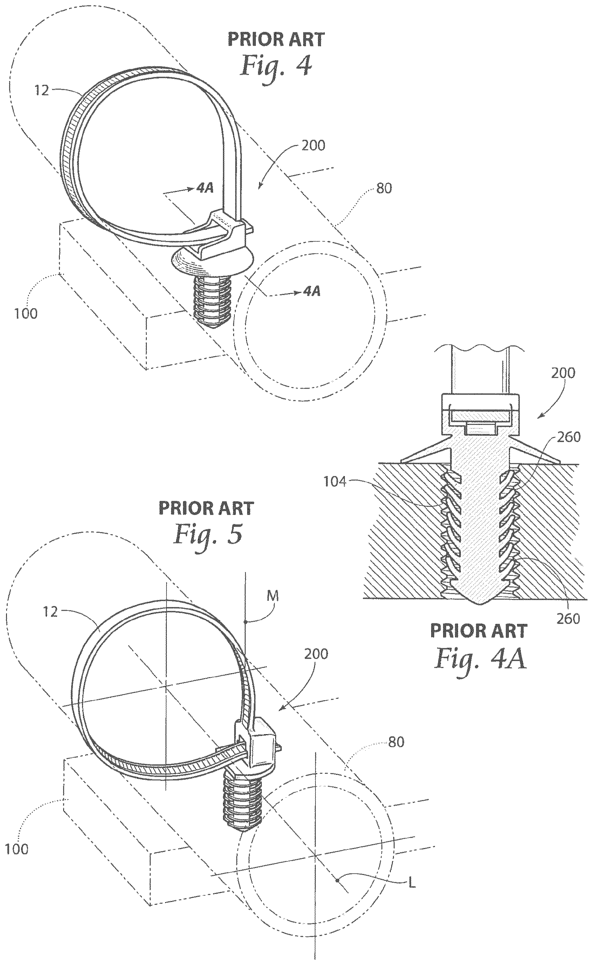

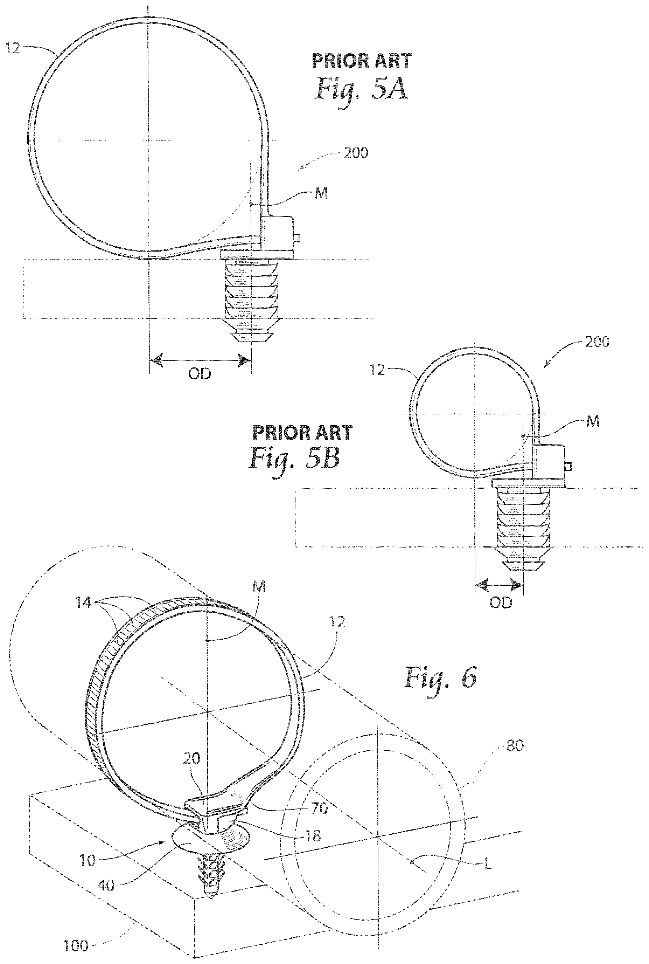

Likewise, many known mounts do not provide a high ratio of mechanical advantage and high retention strength when installed in a threaded hole in a mounting surface. Moreover, known Christmas tree or fir tree mounts, such as those disclosed in U.S. Pat. No. 5,921,510, issued to Benoit et al., and U.S. Pat. No. 4,396,329, issued to Wollar, do not contemplate engaging threaded holes, and therefore leave room for improvement. Moreover, known bundle retention devices may not provide sufficient retention and tightness against the support surface to adequately support a bundled item, or provide retention in threaded thru holes or threaded blind holes. Known fir tree mounts typically engage the bottom edge of a through-hole (see FIG. 5A for example) and are sized to be compatible with common drilled size holes, such as 1/4", 5/16", 3/8", 6 mm, 7 mm, 8 mm, 9 mm, by way of example. However, the internal diameters of drilled and tapped threaded holes do not necessarily correspond with the aforementioned sizes; therefore, the fir tree branches of known devices may be larger or smaller than threaded hole diameters. This shortcoming causes insertion force problems and retention strength problems, as branches are crushed or otherwise deformed thereby reducing retention strength (see for example FIG. 4A). Further, known fir tree mounts do not provide a mating fit and engagement with the root diameter of a helical thread pattern.

Furthermore, known mounting devices that include integrally formed cable ties do not contemplate self-centering of a bundle with a mounting hole. Self-centering with the mounting hole is useful in bundle installations which require uniform bundle alignment along a centerline. The present device provides self-centering to thereby allow automotive and other equipment designers to utilize the mounting bore locations to lay out a harness passageway, from mounting bore centerline to mounting bore centerline, using CAD software. Conversely when a conventional prior art, self-fixing fir tree device with integral cable tie is used, an offset is encountered between the bundle and the mounting bore. This offset can occur when routing a harness on either side of the mounting bore. When an engineer designing the routing of the harness does not know which side of mounting bore the offset will occur, this establishes a level of uncertainty regarding the overall length required of the harness. Further, most harnesses vary in bundle diameter, depending upon how many wires and what wire diameter is to be secured. The variable bundle diameter, along with the offset, establishes another elevated level of uncertainly regarding the overall harness length required. These factors create uncertainty in the user when calculating the required length of a harness to use in automotive or equipment applications.

The self-centering features of the present device allow users, such as automotive and other equipment designers, to align the centerline of a harness to the centerline of a mounting bore and thus reduce the uncertainty mentioned above and further compared in the differences shown in FIGS. 5, 5A, and 5B. The self-centering features further allow automotive and equipment engineers to determine a more precise length of required harness by using CAD software to lay out a routing passage. The present invention provides an improved mounting assembly to address the aforementioned problems, to provide improved mounting retention strength, and improved routing of harnesses.

### SUMMARY OF THE INVENTION

The present invention provides an improved bundle retention and mounting device for securely retaining and supporting bundled items against a supporting surface. The device provides a mount with an aperture, which interacts with a flexible tie strap having serrations, for bundling elongate items. The tie may be integrally formed with the device. The aperture contains a wedging pawl, which provides ratcheting engagement of the serrations when the tie tail, followed by the strap, is inserted in the aperture during bundling. Reversing the direction of the strap engages the pawl teeth to wedge against strap serrations to prevent withdrawal of the strap.

The invention may also include a diaphragm spring and a branched mounting stud, or trunk, extending downwardly from the mount and in an opposite direction from the cable tie. The diaphragm spring provides tension and stability against a support surface when the branched mounting stud is inserted into a bore in the supporting surface. Moreover, branches extend radially and in a helical pattern from a center section of the stud. The branches are arranged in branch rows, with the branch rows being located approximately every 90 degrees about the stud axis. The distal tips of the branches are preferably sized to fit and engage the root diameter of a cut thread profile in the bore to be engaged. Each successive branch tip is located at a predetermined elevation that corresponds to, and follows the specific helical threaded pitch pattern of the thread profile to be engaged. The elevation of corresponding branches in adjacent branch rows follows a helical pitch pattern such that the branches match and engage the root of threads when inserted into a support surface having a threaded aperture.

The present invention may also include self-centering features to locate and secure a bundle in alignment with a mounting bore. Specific self-centering features include a tie head having an integrally formed object support surface, such as a saddle structure, opposite the mounting stud. A strap extending from the tie head may include a flexible hinge member. The hinge member is adapted to move and flex such that the strap conforms to the diameter of a bundle to be secured. Tensioning the strap around a bundle creates circumferential forces against the bundle to self-center the bundle on the object support surface which in turn is centered on the mounting stud. The mounting stud is aligned with the mounting bore.

This unique arrangement thereby secures bundled items such that the longitudinal axis of the bundle is perpendicular to the axis of the mounting stud. Self-centering of bundles in-line with the mounting bore is beneficial in applications in which space, weight, and cost is at a premium. Moreover, in harness-securing applications self-centering permits the bundles to be aligned on a the harness centerline rather than be offset or justified to one side or the other of the mounting bore, as is typical in conventional integrally formed cable tie mount installation devices. Self-centering provides consistent in-line mounting orientations, which then allows simple CAD modeling of the harness, with predictable harness lengths, overall shortest harness lengths, less required space, and at a lower cost. The present invention self-centers bundles of any bundle diameter securable by the cable tie aligned with the mounting bore.

A mounting assembly according to the present invention may include any combination of the above features. Further, the mount and the self-centered routing features may be provided in a combination integral product or as separate components. In addition, the mount may be provided in combination with an alternative fastening device, such as a clip, clamp, mounting saddle, or other compatible fastener.

### BRIEF DESCRIPTION OF THE DRAWINGS

FIGS. 1-4 are perspective views of prior art cable tie mounts.
FIG. 4A is cross sectional view of the prior art shown in FIG. 4, and taken along lines 4A-4A thereof, and showing partial branch engagement of a threaded bore.
FIG. 5 is a perspective view of a prior art cable tie mount and showing a secured bundle as offset from the mount axis.
FIG. 5A is an end view of the prior art shown in FIG. 5, and illustrating a larger bundle offset from a mounting bore.
FIG. 5B is an end view, similar to that of FIG. 5A, but showing a smaller bundle offset from a mounting bore.
FIG. 6 is a perspective view of a mounting device according to the present invention, with a bundle and support surface shown in phantom, and showing aligned axes of the various components.
FIG. 6A is an end view of the device shown in FIG. 6 and illustrating alignment and centering of a bundle and mounting bore.
FIG. 6B is a top view of the device shown in FIGS. 6 and 6A, and further showing alignment of the cooperating components.
FIG. 6C is a cross sectional view of the device illustrated in FIGS. 6-6B and taken along lines 6C-6C of FIG. 6B.
FIG. 7 is a fragmentary, perspective view of a mounting device in accordance with the present invention and showing the relative thickness of the hinge member in the at-rest position.
FIG. 8 is a fragmentary view of the mounting device illustrated in FIG. 7.
FIG. 8A is a view similar to that of FIG. 8 but showing the mounting device supporting a bundle and with the hinge member flexed and the strap circumferentially tensioned about the bundle.
FIG. 9 is a fragmentary side view of the device illustrated in FIGS. 6-8A and rotated 90.degree. from the view of FIG. 8.
FIG. 10 is a sectional view of the device illustrated in FIGS. 6-9 and taken along lines 10-10 of FIG. 8.
FIG. 11 is a bottom view of the device illustrated in FIGS. 6-10.
FIG. 12 is a fragmentary view, similar to that of FIG. 8, but showing the pitch and angle of the interrupted helical branch pattern in which each successive branch tip corresponds to a specific helical thread pitch pattern.
FIG. 13 is a fragmentary perspective view of the mounting section illustrated in FIG. 12.
FIG. 14 is an enlarged fragmentary view of the mounting section illustrated in FIG. 12.
FIG. 15 is a sectional view, similar to that of FIG. 10, but showing the mounting device during insertion or extraction from within a threaded mounting bore in a support surface.
FIG. 15A is a sectional view, similar to that of FIGS. 10 and 15, but showing the mounting device after insertion into a threaded bore in a support surface.
FIG. 16 is a sectional view, similar to that of FIG. 15A, but showing the threaded bore and support surface in phantom.
FIG. 17 is a sectional view, similar to that of FIG. 15A, but showing the device after insertion into a relatively thin support surface with a non-threaded bore, wherein branches extend beyond the support surface thickness and engage an underside of the surface.
FIGS. 18 and 19 are perspective views of alternative embodiments of the present invention, and showing self-centering features including a saddle structure with hinge member.
FIG. 20-24 are perspective views of alternative embodiments utilizing the mounting section illustrated in FIGS. 6-17 and showing various object support members.

### DESCRIPTION OF THE PREFERRED EMBODIMENT

Although the disclosure hereof is detailed and exact to enable those skilled in the art to practice the invention, the physical embodiments herein disclosed merely exemplify the invention which may be embodied in other specific structures. While the preferred embodiment has been described, the details may be changed without departing from the invention, which is defined by the claims.

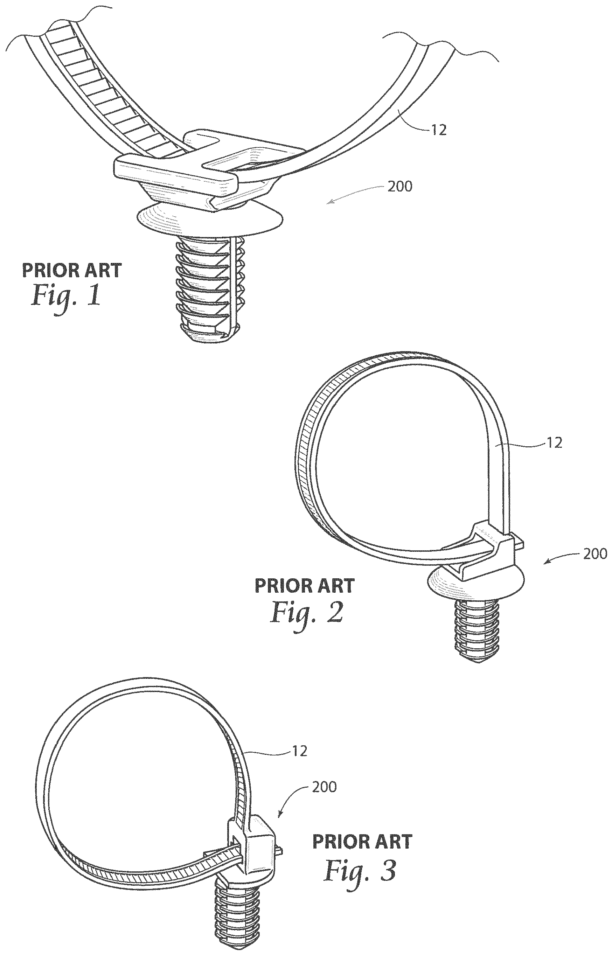

FIGS. 1-5B illustrate prior art mounting devices 200 which either include an integrally formed cable tie 12 or demonstrate use in conjunction with a cable tie 12. As seen particularly in FIGS. 5, 5A, and 5b, known devices 200 are not typically arranged to self-center the longitudinal axis L of a bundle 80 with the vertical axis M of a mount stud in a mounting bore. As shown, particularly in FIGS. 5A and 5B, the offset distance (OD) changes when the bundle diameter changes. Further, prior art mounts 200 having an offset arrangement and branched mounting sections may not provide adequate attachment in threaded and non-threaded bores. FIG. 4A, for example, illustrates a typical prior art mounting device 200 having a branched mounting section. As shown, the individual branches 260 deform in the bore and do not properly engage the threads 104. The present invention overcomes these inadequacies, as will be discussed.

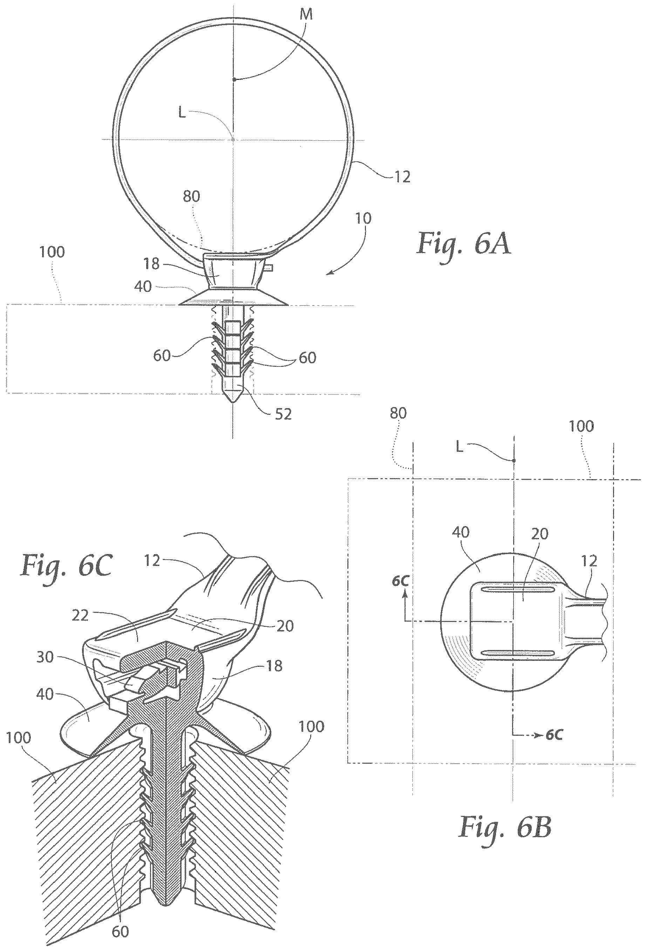

With attention now to FIG. 6, a mounting device 10 according to the present invention may be seen securing an elongated object or bundle 80 to a support surface 100 (seen in phantom). An elongated tie 12 having a strap 16, and a tie head 18 may be integrally formed with the mounting device 10 for use in wrapping and securing around the bundle 80, and to thereby secure the bundle 80 to the mounting device 10, which is in turn secured to the support surface 100. The tie portion 12 is further seen to include a hinge member 70 located adjacent the head 18. The bundle 80 may consist of a single object or several objects, such as wires, cables, hoses, tubing, harnesses or other elongated articles. It will be apparent that the bundle 80 may comprise a bundle of individual wires or cables, rigid or flexible conduit, hot or cold fluid transporting tubes, or hoses. The bundle 80 may also be contained within the bore of a conventional tubular conduit. Likewise, the bundle 80 may be of various sizes and yet be accommodated by the device 10. As seen also in FIG. 6A, the device 10 further centers the bundle 80 on the device 10, with the axis L of the bundle 80 being perpendicular to the axis M of the device 10, as will be discussed.

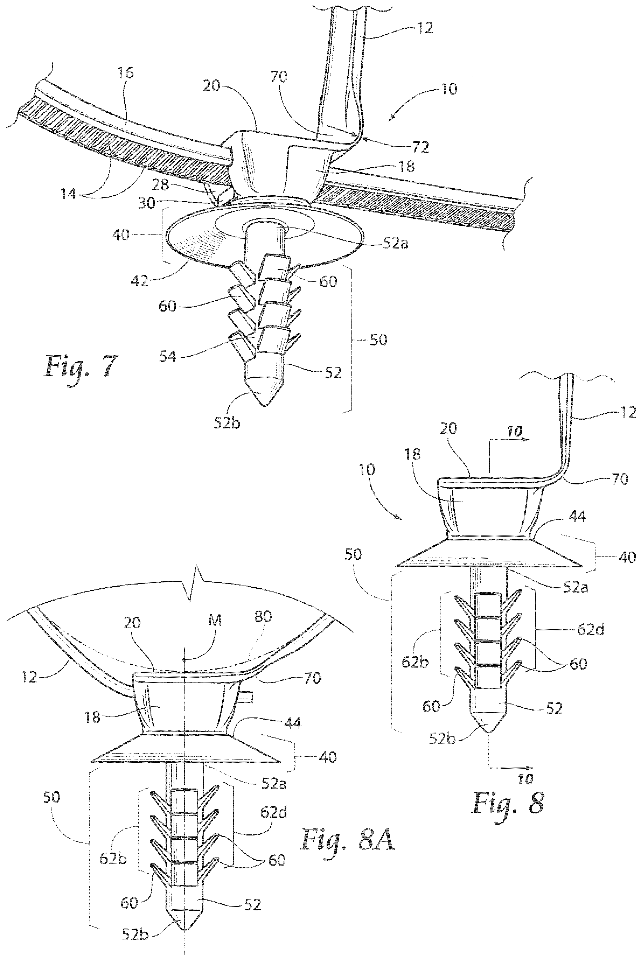

FIG. 7 is a fragmentary perspective view of the mounting device 10 illustrated in FIGS. 6A-6C but showing the hinge member 70 in the at-rest position. As seen, the mounting device 10 may include an integrally formed tie portion 12 having a relatively flat object support surface 20, such as the saddle structure 22 shown, a spring section 40 located below the support surface 20 on the head portion 18, a hinge member 70, and a mounting section 50 extending downwardly from the support surface 20 and the spring section 40. The support surface 20 may be integrally formed with the tie head 18 provides support for a bundle 80. The tie head 18 includes an aperture 28 having a pawl 30 or other device to provide ratcheting attachment of the strap 16. The spring section 40 and the mounting section 50 extend from the head 18. It should be understood that the support surface 20 and the tie head 18 should not be limited to any specific orientation. Each of these sections will be described in more detail with respect to the following Figures.

As is viewed in FIGS. 6-8A, the mounting device 10 may be provided with a hinge member 70. As shown, the hinge member 70 is preferably integrated with the tie portion 12 and adjacent the head 18. With particular attention to FIG. 7, it may be seen that the hinge member 70 includes an area of reduced thickness 72 to permit facile movement of the hinge member 70. The hinge member 70 is adapted to flex about the area of reduced thickness 72 and to allow the strap 12 to encircle and conform to the bundle 80, thereby securing the bundle 80 without exerting uneven force against the bundle 80. The hinge member 70 allows the strap 12 to apply an even circumferential force on the bundle 80 to thereby center the bundle 80 against the flat support surface 20. The support surface 20 is in turn, centered on the mounting stud 50. The unique arrangement permits bundles 80 to be secured and self-centered such that the longitudinal axis (L) of the bundle 80 is perpendicular to the axis (M) of the mounting section 50 (see FIGS. 6 and 6A). The feature of the hinge member 70, in combination with the support surface 20, enables the device 10 to align bundles 80 with a mounting bore 102 centerline that is coextensive with the axis (M) of the mounting section 50. This is unlike known devices 200 in which bundles 80 are offset or justified from the axis (M), as is shown in FIGS. 1-5A. Further, the hinge member 70 allows the tie strap 16 to move and flex such that the strap 16 conforms to the diameter of the bundle 80 to be secured. The tensioned strap 16 causes circumferential forces against the bundle 80 to self-center the bundle 80 on the object support surface 20 which is in turn, centered on the mounting stud 50. The uniform circumferential force against the bundle 80 centers the bundle 80 on the support surface 20, mounting stud 50 axis (M), and bore 102. It is to be understood that while the Figures depict the device 10 installed with a downwardly extending mounting section 50, the device 10 may be installed in other orientations, for example, extending from the underside of a support surface 100.

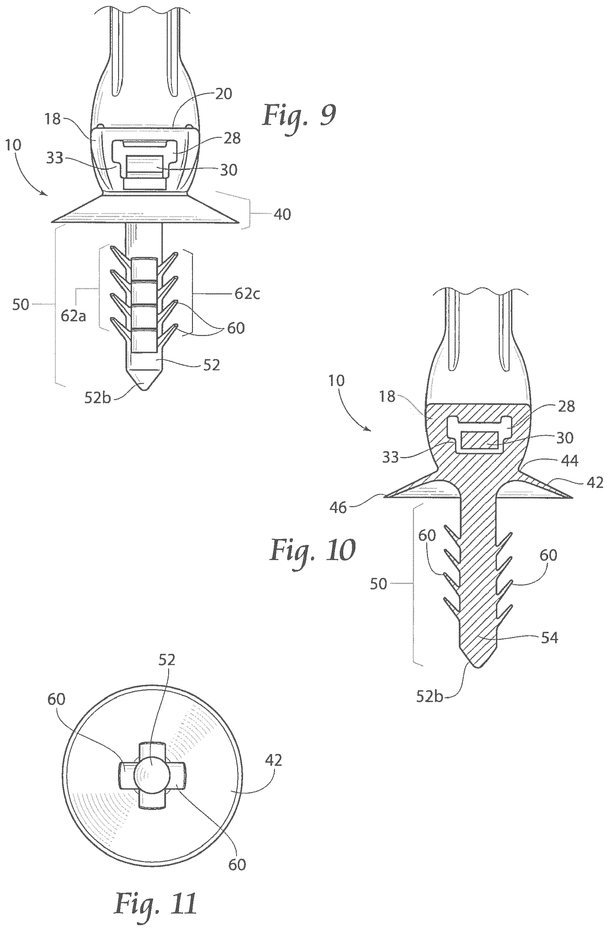

With further attention to FIG. 7, the mounting device 10 may be seen interacting with the integral elongated tie strap 16 prior to the strap 16 being secured around the bundled bundle 80 (as is shown in FIG. 6). The strap 16 is inserted through the aperture 28, and a pawl 30 provides ratcheting engagement of the strap 16 serrations 14 against forces encountered when moving or grabbing the mounting device 10. The pawl 30 also holds the strap 16 in a ready position so that the strap 16 is in proper orientation to allow immediate cinching or wrapping of a bundle. The pawl 30 may also be seen in the sectional views of FIGS. 6C and 10. Since the present design contemplates a molding process to form the mounting device 10, the pawl 30 may also be molded so that it is strong enough to resist movement of the strap 16 when it is inserted into the aperture 28, while being flexible enough to flex when the tie 12 secures a bundle 80.

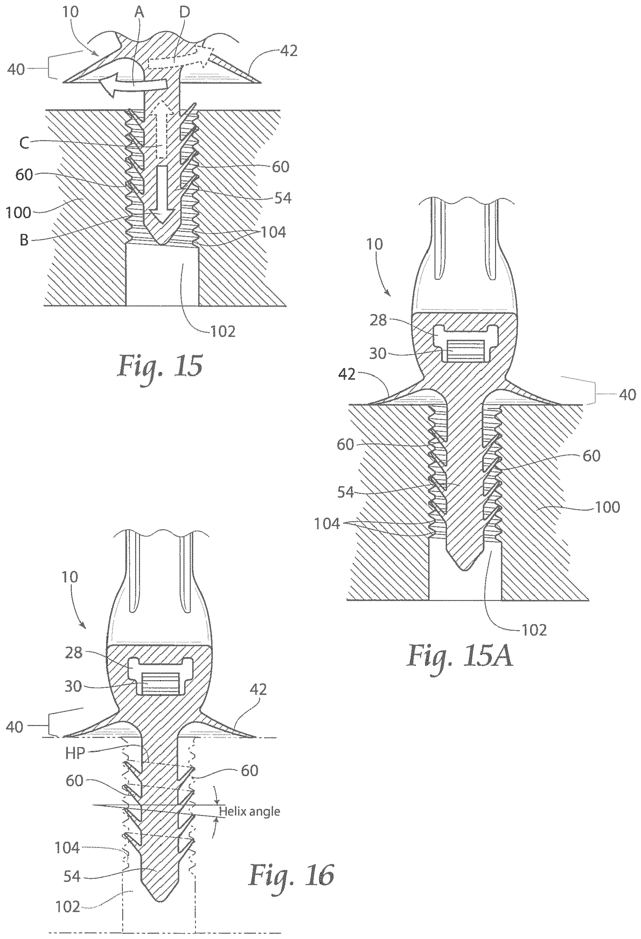

Referring to FIGS. 7-10, the spring section 40 is generally comprised of a flexible disk or diaphragm spring 42. As seen, the diaphragm spring 42 preferably extends downwardly from the tie head 18. The diaphragm spring 42 tapers downwardly and outwardly from a first end 44 located at the tie head 18 to a second end 46. FIGS. 7-10 illustrate the diaphragm spring 42 in a relaxed position; however, as the mounting stud 52 moves into a bore 102, as is seen in FIGS. 15A-17, the diaphragm spring 42 flexes against the support surface 100 and provides a tight fit against the support surface 100. The diaphragm spring 42 provides a preload spring tension and further secures the device 10 against a support surface 100. The device 10 is retained in the bore 102 by the force of the branches 60 and the helical arrangement of the branch rows 62a, 62b, 62c, 62d. The diaphragm spring 42 provides tension and stability against the support surface 100. The view of FIG. 11 illustrates a bottom view of the diaphragm spring 42. As seen, the diameter of the diaphragm spring 42 is preferably greater than that of the mounting stud 52 such that the diaphragm spring 42 will flex against the support surface 100 to provide a tight fit when the mounting device 10 is inserted into a bore 102 of a support surface 100. The Figures illustrate a diaphragm spring 42 as generally circular and conical; however, the shape and structure may be of any flexible geometric design or arrangement that is capable of providing the necessary resistance to the spring section 40. For example, the diaphragm spring 42 may consist of a pyramidal shape of any number of sides, which may or may not have each of the sides connected to an adjoining side.

With particular reference to FIGS. 7-14, the mounting section 50 may be seen to include a mounting stud 52 having a proximal end 52a located adjacent the tie head 18, and a distal end 52b located opposite the proximal end 52a. The mounting stud 52 extends downwardly from the tie head 18. The mounting stud 52 also may be considered to extend downwardly from the spring section 40; however, the spring section 40 may be arranged so that it surrounds the proximal end 52a of the mounting stud 52 and the stud 52 does not actually depend from the spring section 40 or the diaphragm spring 42. Either of the mentioned arrangements fall within the scope of the invention and should not be considered limiting on the invention. As illustrated, the mounting stud 52 includes a center section 54 substantially coextensive with the lengthwise dimension of the mounting stud 52.

FIGS. 8-14 are views that particularly illustrate the center section 54 of the mounting stud 52. As shown, the center section 54 includes a plurality of radially extending extensions or branches 60. Such an arrangement is generally referred to as a fir tree mounting stud or a Christmas tree mounting stud. As seen, the branches 60 extend radially, in a helical thread pattern, and outwardly from the center section 54. The branches 60 are longitudinally spaced from one another, and are tapered upwardly towards the tie head 18. The branches 60 are further arranged in branch rows 62a, 62b, 62c, 62d which are spaced apart approximately 90 degrees around a center section axis (L). Individual branches 60 in each branch row 62a, 62b, 62c, 62d are evenly spaced apart from one another; however, and as shown, the branch rows 62a, 62b, 62c, 62d are arranged such that the branches 60 in respective branch rows 62a, 62b, 62c, 62d lie in parallel planes extending approximately half way between the parallel planes formed by two adjacent rows 62a, 62b, 62c, 62d, as will be discussed.

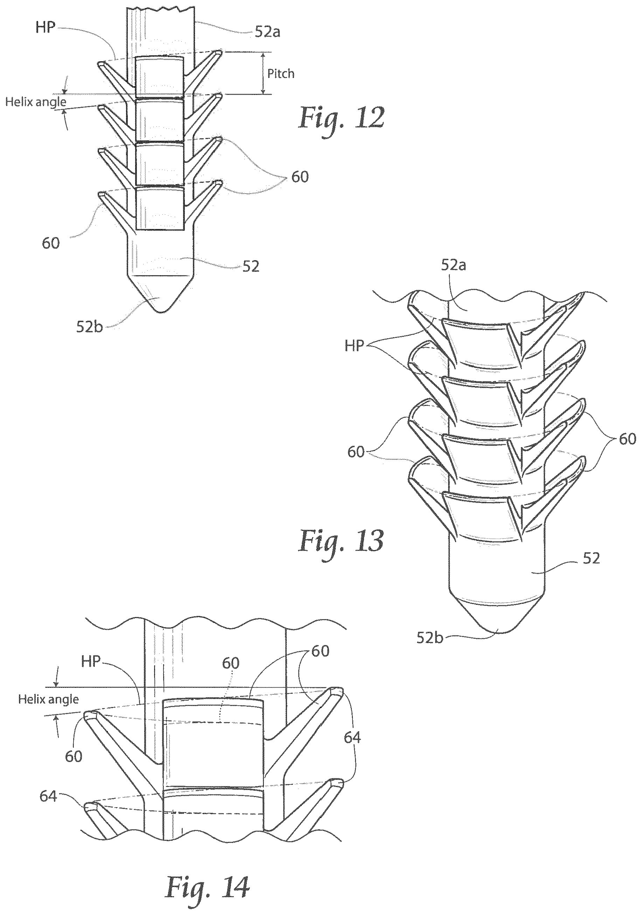

As may be viewed particularly in FIGS. 12-15, the branch rows 62a, 62b, 62c, 62d are preferably arranged in a staggered pattern relative to one another around the center section 54. As shown in FIG. 15, each branch 60 includes a distal end 64 sized to fit and engage a root diameter of a cut thread 104 profile of a threaded bore 102. The distal end 64 of each branch 60 in a branch row 62a, 62b, 62c, 62d is spaced apart a predetermined distance, or pitch, from an adjacent branch 60 and its distal end 64 (See FIG. 12). Further seen, the distal ends 64 of branches 60 in adjacent branch rows 62a, 62b, 62c, 62d are preferably arranged such that a virtual helical path HP may be traced from a first distal end 64 to a corresponding distal end 64 of an adjacent branch row 62a, 62b, 62c, 62d. The virtual helical path HP, defined by its pitch and helix angle, preferably correlates with the threading 104 of a threaded bore 102 in which the device 10 may be mounted. The views of FIGS. 15 and 16 particularly illustrate the engagement of distal ends 64 with threads 104.

As is illustrated in FIGS. 12-16, the arrangement of distal ends 64 in virtual helical path HP allows for a stronger and a more easily inserted mounting device 10 than in previous designs with symmetrical designs. Seen particularly in FIGS. 15 and 15A, the stud 52 is inserted into the supporting surface 100, and is rotated in the direction of arrow A. The distal ends 64 of individual branches 60 make serialized contact with the support surface 100, thereby easing insertion of the stud 52 as it moves in the direction of arrow B. Further, the helical arrangement of the branches 60 allows mating fit and engagement of the branches 60 with the threads 104. Moreover, the staggered helical pattern of the branch rows 62a, 62b, 62c, 62d provides a more secure retention of the device 10 than is possible with a typical stud, with the force required to remove the stud 52 from the support surface 100 being increased by the numerous contacting branch distal ends 64. The device 10 may be removed from the bore 102 by rotating in the direction of phantom arrow C. When rotated in the direction of arrow C the distal ends 64 of the branches 60 ride the threads 104 in a reverse direction as the device 10 moves in the direction of phantom arrow D.

As may be viewed particularly in FIG. 16, each successive distal end 64 engages the threading 104 along a virtual helical path HP. Since each branch end 64 is engaged with the threading 104, the device 10 resists withdrawal from the bore 102 at an increased retention strength. Further, the branches 60 are small in thickness to provide flexibility. Moreover the branches 60 emanate from the stud 52 at a more acute angle with respect to the stud 52 (see FIGS. 12 and 14) to provides improved retention strength compared to known symmetrical designs. The aforementioned reduction in branch 60 thickness allows for strategically locating and matching the branches 60 to the pitch of the helical thread pattern as is seen in FIGS. 6C, 15, and 15A, to thereby provide more numerous distal end 64 contact points along a threading 104. This arrangement provides collective simultaneous engagement of all the branches 60 working in unison thereby improving the retention strength of the device 10 more securely than known devices 200. The device 10, as illustrated in these views, provides more distal end 64 contact points than does a conventional symmetrical design; however, more or fewer distal end 64 contact points may be provided and the number of branch rows 62a, 62b, 62c, 62d may vary and still fall within the scope of the invention. The helical path HP of the present mounting stud 10 provides increased engagement of the device 10 by using the distal end 64 contact points to improve retention strength in a threaded bore 102.

Another advantage the helical path (HP) branch row 62a, 62b, 62c, 62d arrangement provides is to allow the branches 60 to be spaced apart for optimal distal end 64 contact with a threaded bore 102. Branches 60 for use with the present invention are preferably thin, flexible branches 60 molded at an acute angle relative to the stud 52 and configured to provide lower insertion forces yet transfer higher extraction forces to the stud 52. It is to be understood that branches 60 for use with the present device 10 may be of different shapes and designs from that shown and still fall within the present invention. For example, the branches 60 could be of a warped shape, wavy design, or other shapes as desired. Likewise, the stud 52 could be oval or another shape as may be necessary for a particular application.

Referring to FIGS. 9 and 10, the tie head 18 further includes an aperture 28 having a pawl 30 extending into the aperture 28. The pawl 30 engages the elongated strap 16 when the strap 16 is inserted into the aperture 28, and preferably contacts a plurality of serrations 14 located on the strap 16 (see FIGS. 6 and 7). The pawl 30 engages serrations 14 on the strap 16 to retain the strap 16 from withdrawal when secured around a bundle 80. FIG. 9 shows a side view of the mounting device 10, rotated 90.degree. from the view shown in FIG. 8. As seen, the width of the center section 54 is preferably uniform. A uniform diameter of the center section 54 allows the branches 60 to be more flexible than in previous designs, thereby providing a more secure mounting device 10.

FIGS. 9 and 10 also show a pair of shoulders 33 extending upwardly and into the aperture 28. The shoulders 33 are preferably located on either side of the pawl 30. When the bundle 80 is secured (see FIGS. 6 and 7), the strap 16 will be pulled so that the pawl 30 flexes and the tie 12 may be tightened around the bundle 80. The shoulders 33 provide a solid resistance that the strap 16 will abut, thereby firmly securing the bundle 80. The pawl 30 is arranged to flex and not interfere with the strap 16 abutting the shoulders 33. Moreover, the shoulders 33 form a recessed channel for the pawl 30, such that the pawl 30 may flex during strap 16 insertion while maintaining rigidity to hold the strap 16 in place. The arrangement and number of shoulders 33 and the pawl 30 may differ from that shown in the drawings.

FIGS. 15A-16 illustrate sectional views of the mounting stud 52, similar to that of FIG. 10, but showing the device 10 in use and inserted in a support 100 having a threaded bore 102. As seen, the branches 60 engage threading 104 in the bore 102 to resist pull out. FIG. 16 particularly illustrates the manner in which the offset branch rows 62a, 62b, 62c, 62d allow a more secure engagement of the staggered individual branches 60 to threads 104.

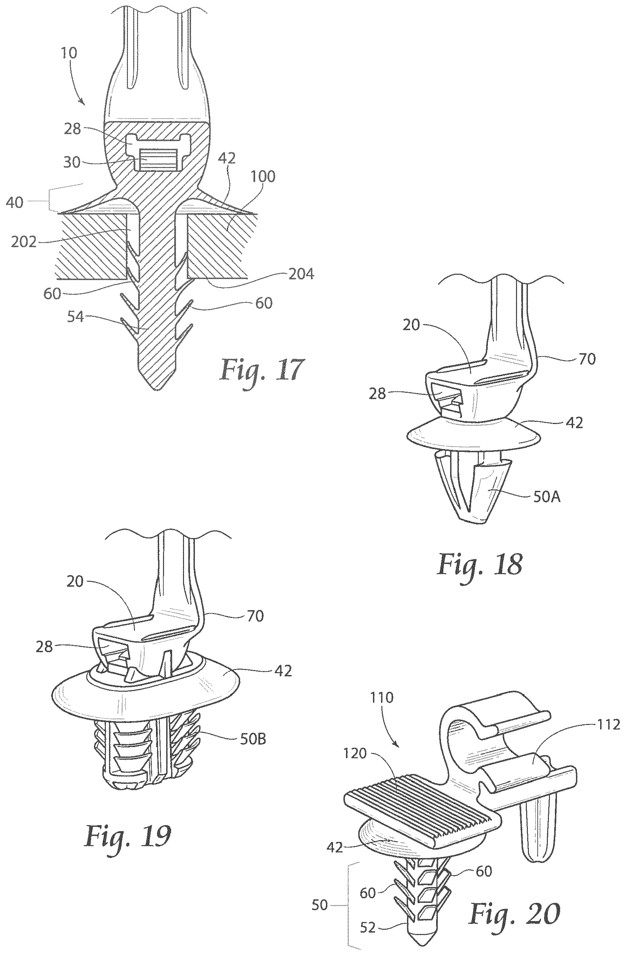

FIG. 17 illustrates the device 10 in use in conjunction with support surface 100 having a lesser thickness and a non-threaded bore 202. When used in this environment the center section 54 extends beyond the bore 202 with the branches 60 engaging the underside 204 of the bore 202. The view of FIG. 17 illustrates another example of an environment in which the device 10 may be used. As seen, the present invention improves previous designs and is suited for use with varying support surfaces 100 including those with threaded or non-threaded bores, and also in support surfaces 100 of varying thicknesses.

In use, the mounting stud 52 can be driven into a bore 102, 202 either by hand, with a striking tool (i.e. a rubber mallet), or by twisting as shown in FIG. 15. As the mounting stud 52 enters the bore 102, the branches 60 engage the sides of the bore 102, 202. When the bore 102 is provided with threading 104, as seen and discussed with reference to FIGS. 15-16, the staggered, helically patterned branch row 62a, 62b, 62c, 62d arrangement allows the threads 104 to be engaged by the distal ends 64, unlike previous designs. When the device 10 is to be used in a relatively smooth bore 202, as is seen in FIG. 17, the staggered, helically patterned arrangement of the branch rows 62a, 62b, 62c, 62d also provides a more secure engagement and retention of the device 10 to the support 100. When the mounting device 10 is pulled, the branches 60 resist such movement, especially in the longer bores 102, 202 shown, that have been tapped or located in a masonry surface.

The features discussed in the invention may be present in a single mounting device 10, or a mounting device 10 may contain one or a combination of the described features and still fall within the scope of the invention. For example, FIGS. 18 and 19 illustrate the self-centering features of an object support 20, seen as a saddle structure 22, and hinge member 70 in combination with alternative mounting sections 50A, 50B. Preferably the components for the mounting device 10 are injection molded from a strong, durable plastic, such as Nylon 6/6.

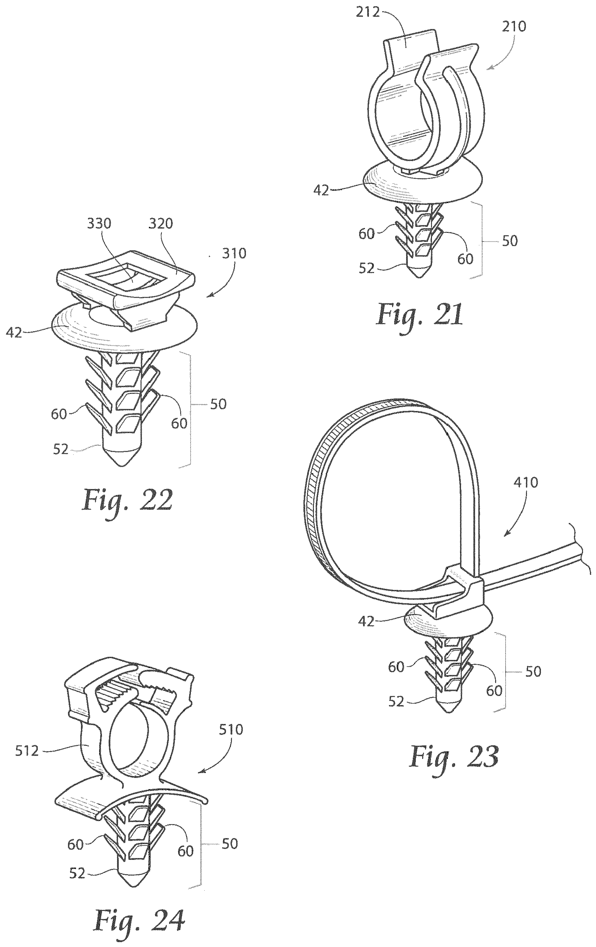

FIGS. 20-24 are perspective views of alternative embodiments utilizing the mounting section 50 illustrated in FIGS. 6-17 and showing various object support members. For example, and as seen in FIG. 20, a mounting device 110 is shown employing a diaphragm spring 42 and a mounting section 50 with staggered, helically arranged branch rows 62a, 62b, 62c, 62d. A push pad 120 is provided which locates the clip 112 or saddle structure offset a distance from the mounting bore (not seen in this view). The mounting device 110 of this view includes a wire or cable clip 112 located on the mounting device 110, as opposed to the tie 12 used in the previously described embodiments. Similarly, FIG. 21 shows a mounting device 210 designed with a diaphragm spring 42, a mounting section 50 with helically arranged branch rows 62a, 62b, 62c, 62d, and, also, a clip 212 used in place of a tie 12. The mounting device 310 depicted in FIG. 22 includes a diaphragm spring 42, a mounting section 50 with helically arranged branch rows 62a, 62b, 62c, 62d, and alternative saddle structure 320. Another embodiment includes use of a friction tab 330. The friction tab 330 provides resistance similar to the previously described pawl 30. FIG. 23 shows a mounting device 410 having an alternative arrangement of an integral tie strap 12. The mounting device 410 utilizes the diaphragm spring 42 and the mounting section 50 with helically arranged branch rows 62a, 62b, 62c, 62d. FIG. 24 illustrates another mounting device 510 utilizing the mounting section 50 with helically arranged branch rows 62a, 62b, 62c, 62d, in which a toothed clip 512 is used to secure bundles 80 (not shown in this view). As is evident by these embodiments, the present invention may be used in many varying arrangements.

The foregoing is considered as illustrative only of the principles of the invention. For instance, the tie 12 should be considered broadly to encompass a structure that will secure an object to the mounting device, such as the clips 112 and 212 shown in FIGS. 20 and 21. Likewise, the clips 112 and 212, or other similarly contemplated designs, should be understood as incorporated under the previously discussed aperture for interaction with the tie 12. Furthermore, since numerous modifications and changes will readily occur to those skilled in the art, it is not desired to limit the invention to the exact construction and operation shown and described. While the preferred embodiment has been described, the details may be changed without departing from the invention, which is defined by the claims.

## Claims

1. A mounting assembly for anchoring an elongate member to a supporting structure, said mounting assembly including an integrally formed flexible tie having a strap (12) for surrounding said bundled elongate member, said mounting assembly comprising: a support (100) containing an aperture (28), said aperture (28) adapted to receive said strap (12), said support (100) including a top surface and a bottom surface; a pawl (30) located in said aperture (28) of said support (100), said pawl (30) providing resistance to longitudinal movement of said strap (12) when said strap (12) is arranged in said aperture (28); said strap (12) including a hinge member (70), said hinge member (70) located adjacent said support (100); and a mounting stud (10) having a distal end (52b) and a proximal end (52a), said proximal end (52a) extending from said bottom surface of said support (100), said distal end (52b) arranged for insertion into said supporting structure.

2. The mounting assembly of claim 1 wherein said hinge member (70) comprises an area of reduced thickness (72).

3. The mounting assembly according to claim 2 wherein said mounting stud (10) further comprises: a center section (54); and a plurality of longitudinally spaced branches (60) located on said center section (54), said branches (60) extending outwardly from said center section (54) and being arranged in a plurality of longitudinally extending branch rows (62a), said branch rows (62a) being arranged about the center section (54) in a helical pattern.

4. The mounting assembly according to claim 3 further including a diaphragm (24) member extending from said bottom surface.

5. A mounting assembly for anchoring an elongate member to a supporting structure, said mounting assembly including an integrally formed flexible tie having a tie head (18) and a strap (12) for surrounding said elongate member, said mounting assembly comprising: an object support (20) located on said tie head (18), said tie head (18) including a bottom surface and an aperture (28), said aperture (28) adapted to receive said strap (12); a hinge member (70) located on said strap (12), said hinge member (70) comprising an area of reduced thickness (72); a mounting stud (10), said mounting stud (10) having a proximal end (52a) and a distal end (52b), said proximal end (52a) extending from said bottom surface of said tie head (18), said distal end (52b) arranged for insertion into said supporting structure, said mounting stud (10) further including a plurality of branch rows (62a), said branch rows (62a) being longitudinally coextensive with said stud (52); and a plurality of longitudinally spaced branches (60), said branches (60) radially extending from said center section (54) and located on said branch rows (62a).

6. The mounting assembly of claim 5 wherein said branch rows (62a) are arranged in a helical pattern.

7. The mounting assembly according to claim 6 wherein each of said branches (60) terminates at a branch distal end (64) and wherein each branch (60) is tapered towards said bottom surface of said tie head (18).

8. The mounting assembly according to claim 7 wherein the branch distal end (64) of each branch (60) in a branch row (62a) is spaced apart a predetermined distance from an adjacent branch distal end (64), and wherein distal ends (64) of branches (60) in adjacent branch rows (62a) define an interrupted helical path.

9. A mounting assembly for anchoring an elongate member to a supporting structure, said mounting assembly including an integrally formed flexible tie (12) having a tie head (18) and a strap (12) for surrounding said elongate member, said mount comprising: a support (100) located on said tie head (18), said tie head (18) containing an aperture (28), said aperture (28) adapted to receive said strap (12), said support (100) including a bottom surface; a hinge member (70) located on said strap (12); a diaphragm (24) extending from said bottom surface; and said mounting stud (10) having a distal end (52b) and a proximal end (52a), said proximal end (52a) extending from said bottom surface and arranged for insertion into a bore (102) in said supporting structure.

10. The mounting assembly of claim 9 wherein said hinge member (70) comprises an area of reduced thickness (72).

11. The mounting assembly according to claim 9 or 10 wherein said diaphragm (24) tapers outwardly from said bottom surface of said tie head (18).

12. The mounting assembly according to any one of claims 9 to 11 wherein said diaphragm (24) has a diameter greater than a diameter of said mounting stud (10).

13. The mounting assembly according to any one of claims 9 to 12 further comprising a pawl (30) located in said aperture (28) of said tie head (18).

14. The mounting assembly according to any one of claims 9 to 13 wherein said mounting stud (10) further comprises: a center section (54), said center section (54) being longitudinally coextensive with said stud (52); a plurality of branch rows (62a), said branch rows (62a) located on said center section (54) and being coextensive with said center section (54); and each of said plurality of branch rows (62a) including a plurality of longitudinally spaced branches (60), said branches (60) extending outwardly from said center section (54).

15. A mounting assembly according to claim 14 wherein each of said branches (60) terminates in a distal end (64) and wherein distal ends (64) of branches (60) in adjacent branch rows (62a) define an interrupted helical path.
